# EUROPÄISCHE PATENTSCHRIFT

(11) **EP 1 917 185 B1**
(45) Veröffentlichungstag und Bekanntmachung des Hinweises auf die Patenterteilung: **17.11.2010**
(21) Anmeldenummer: 06777042.0
(22) Anmeldetag: 23.08.2006
(51) Int. Cl.: B64C 1/40, B60R 13/08

(54) **SCHALLDÄMMELEMENT FÜR VERKEHRSMITTEL, INSBESONDERE FÜR LUFTFAHRZEUGE**
SOUND-ABSORBING ELEMENT FOR TRANSPORT MEANS, IN PARTICULAR FOR AIRCRAFT
ELEMENT D'INSONORISATION DESTINE A DES VEHICULES, NOTAMMENT A DES AERONEFS

(30) Priorität: 23.08.2005 DE 102005039767
(43) Veröffentlichungstag der Anmeldung: 07.05.2008
(73) Patentinhaber: Airbus Operations GmbH, 21129 Hamburg (DE)
(72) Erfinder: HÖTZELDT, Stephan, 28215 Bremen (DE); BECKER, Malte, 28279 Bremen (DE); OHLENDORF, Bernd, 28199 Bremen (DE); ERFURTH, Steffen, 28357 Bremen (DE)
(74) Vertreter: Kopf, Korbinian Paul
(86) Internationale Anmeldenummer: PCT/EP2006/008291
(87) Internationale Veröffentlichungsnummer: WO 2007/022973

(56) Entgegenhaltungen:
- EP-A- 1 188 547
- EP-A1- 0 677 429
- WO-A-86/00658
- DE-A1- 19 846 436
- DE-A1- 19 916 838
- DE-U1- 9 215 618
- FR-A- 2 733 262
- US-A- 4 084 366

## Beschreibung

Die Erfindung betrifft ein Schalldämmelement für Verkehrsmittel, insbesondere für Luftfahrzeuge, mit mindestens einer auf einer Grundplatte angeordneten Schalldämmplatte, wobei die Grundplatte eine Vielzahl von Ausnehmungen, insbesondere ein Lochraster oder dergleichen, zur Transmission von Schall aufweist.

Zur Schalldämmung von Flugzeuginnenräumen werden Sandwichplatten eingesetzt, die einen beidseitig mit Deckschichten versehenen Honigwabenkern als Kernstruktur aufweisen. Der Honigwabenkern ist beispielsweise mit phenolharzgetränktem Nomex^{®}- Papier gebildet, während die Deckschichten mit einem faserverstärkten Kunststoffmaterial, insbesondere mit einem so genannten "Prepreg"-Material gebildet sind. Bei dem "Prepreg"- Material handelt es sich um Verstärkungsfasergewebe, Verstärkungsfasergelege oder um Verstärkungsfasern, die bereits herstellerseitig mit einem geeigneten Harzsystem, beispielsweise einem Epoxydharz oder dergleichen, vorimprägniert wurden und die anschließend bei geeigneten Temperaturen und Druckverhältnissen ohne weitere Zusatzstoffe, wie zum Beispiel Härter, ausgehärtet werden. Die Verstärkungsfasergelege, die Verstärkungsfasergewebe sowie die Verstärkungsfasern können zum Beispiel mit Kohlefasern, Glasfasern, Aramidfasern oder dergleichen gebildet sein. Bei derartigen Sandwichplatten ist jedoch keine Gasdurchlässigkeit in einem nennenswerten Umfang gegeben.

Weiterhin sind Schalldämmelemente bekannt, bei denen eine Dämmstoffschicht zur Schallabsorption zwischen Lochblechen oder dergleichen angeordnet ist. Derartige Konstruktionen weisen für Anwendungen im Flugzeugbau ein in der Regel zu hohes Flächengewicht auf.

US 4 084 366 beschreibt ein Schalldämmelement mit einem starren Rahmen, in dem eine Honigwabenkernstruktur angeordnet ist. Dünne Bleche mit kleinen Öffnungen sind an beiden Seiten des Rahmens befestigt.

DE 92 15 618 U1 beschreibt ein ähnliches Schallschutzsystem.

Die FR 2 733 262 beschreibt eine weitere Schallisolierungsanordnung, bei der Isolationspanelen elastisch an einem Tragegestell montiert sind.

Aufgabe der Erfindung ist es, ein Schalldämmelement zur Schalldämmung von Flugzeuginnenräumen zu schaffen, das über eine ausreichende Gasdurchlässigkeit bei einem gleichzeitig geringen Gewicht und einer langen Haltbarkeit verfügt.

Die erfindungsgemäße Aufgabe wird durch ein Schalldämmelement nach Maßgabe des Patentanspruchs 1 gelöst.

Dadurch, dass die Schalldämmplatte oder die Schalldämmplatten jeweils von einem Rahmen eingefasst sind, wobei an dem wenigstens einen Rahmen zumindest abschnittsweise ein Übergangsprofil, insbesondere zur Vermeidung von Ermüdungsbrüchen infolge von Steifigkeitssprüngen zwischen dem wenigstens einen Rahmen und der Grundplatte, angeordnet ist,
ist das erfindungsgemäße Schalldämmelement gasdurchlässig und weist ein geringes Flächengewicht bei einer zugleich hohen mechanischen Festigkeit auf. Infolge der erfindungsgemäß vorgesehenen Übergangsprofile zwischen der Grundplatte und dem Rahmen zur Einfassung der Schalldämmplatten innerhalb des Schalldämmelements ist eine weitgehende Ermüdungsfreiheit des erfindungsgemäßen Schalldämmelements auch über lange Betriebszeiten hinweg gegeben.

Nach Maßgabe einer vorteilhaften Ausgestaltung des erfindungsgemäßen Schalldämmelements ist das wenigstens eine Übergangsprofil mit einem selbstklebenden Kunststoffmaterial gebildet.

Das selbstklebende Kunststoffmaterial erlaubt eine einfache Applikation der Übergangsprofile. Gleichzeitig wird eine gute mechanische Anbindung der Übergangsprofile zwischen den Rahmensegmenten und der Grundplatte erreicht. Die Übergangsprofile sind beispielsweise mit einer Zweikomponenten-Dichtmasse als Kunststoffmaterial, insbesondere auf der Basis eines Polysulfid-Polymers, eines Polythioether-Polymers, eines Vinylidenfluorid-Polymers, eines Hexafluorpropylen-Polymers (FPM), eines Polyurethan-Polymers oder dergleichen, gebildet. Die Übergangsprofile können beispielsweise eine quadratische, rechteckförmige, hohlkehlförmige, dreieckförmige oder viertelkreisförmige Querschnittsgeometrie aufweisen und zum Beispiel als so genannte Meterware vorliegen. Durch entsprechendes Ablängen lassen sich aus der Meterware dann die benötigten, den geometrischen Abmessungen der Rahmen angepasste, Übergangsprofile bilden. Alternativ können die Übergangsprofile beispielsweise auch mit einem der vorstehend genannten Kunststoffmaterialien in der Form einer Spachtelmasse oder einer Spritzmasse gebildet sein.

In Gemäßheit einer weiteren vorteilhaften Ausgestaltung des Schalldämmelements sind der Rahmen oder die Rahmen mit jeweils vier Rahmensegmenten gebildet, wobei die Rahmensegmente im Wesentlichen auf Stoß und in etwa rechtwinklig zueinander zur Bildung eines jeweils im Wesentlichen viereckigen Rahmens mit der Grundplatte verbunden sind.
Aufgrund der einfachen, bevorzugt viereckigen Rahmengeometrie lässt sich das erfindungsgemäße Schalldämmelement einfach und kostengünstig herstellen. Die Rahmensegmente werden in einer bevorzugten Ausführungsform zur Bildung der Rahmen auf die Grundplatte aufgeklebt.

In einer weiteren vorteilhaften Ausgestaltung der Erfindung ist vorgesehen, dass das wenigstens eine Übergangsprofil zumindest abschnittsweise mit mindestens einem Rahmensegment und mit der Grundplatte verbunden ist.
Da die Rahmensegmente mit der Grundplatte verklebt sind, kann die Grundplatte im Wesentlichen in den Innenbereichen der Rahmen infolge der auftreffenden Schallenergie zu Schwingungen angeregt werden. Aufgrund des Umstandes, dass die Grundplatte bevorzugt nur eine geringe Materialstärke aufweist, ergeben sich im Übergangsbereich zu den aufgeklebten Rahmensegmenten, insbesondere im Bereich der Innenflächen der Rahmensegmente, so genannte Steifigkeitssprünge, die zu Ermüdungserscheinungen, insbesondere zu Ermüdungsbrüchen, in diesen Bereichen führen können, so dass die Übergangsprofile zur wirksamen Unterdrückung von Ermüdungsbrüchen insbesondere in den Übergangsbereichen zwischen den Innenflächen der Rahmensegmente und der Grundplatte angeordnet sind.

In Gemäßheit einer weiteren vorteilhaften Ausgestaltung sind die Rahmensegmente mit Hohlprofilen, insbesondere mit Rechteckhohlprofilen zur Drainage von Wasser und Fremdpartikeln, gebildet.
Der Einsatz von Rechteckhohlprofilen erlaubt eine wirksame Versteifung der Grundplatte, bei einer gleichzeitig einfachen Herstellbarkeit. Zudem erlauben Rechteckhohlprofile hohe mechanische Festigkeiten bei einem geringem Gewicht. Ferner können Schmutzpartikel bzw. eingedrungenes Wasser durch die Rechteckhohlprofile leicht abgeleitet werden.

Eine weitere vorteilhafte Ausgestaltung sieht vor, dass in Eckbereichen der Rahmen jeweils eine Verbindungslasche auf die Rahmensegmente zur mechanischen Versteifung aufgebracht ist.
Das Aufbringen der Verbindungslaschen in den Eckbereichen der auf die Grundplatte aufgeklebten Rahmensegmente erlaubt eine wirksame mechanische Versteifung der mit den Rahmensegmenten gebildeten Rahmen. Die Verbindungslaschen weisen hierbei, in Abhängigkeit von der Anzahl der in den Eckbereichen jeweils aufeinander treffenden Rahmensegmente entweder eine winkelförmige, eine T-förmig oder eine kreuzförmige Formgebung auf. Die Verbindungslaschen können aufgeklebt oder auch mittels bekannter Schweißverfahren fest mit den Rahmensegmenten verbunden werden.

Nach Maßgabe einer weiteren vorteilhaften Ausgestaltung ist vorgesehen, dass ausgehend von den jeweils diagonal gegenüberliegenden Eckbereichen des wenigstens einen Rahmens jeweils ein Halteband zur Fixierung der wenigstens einen Schalldämmplatte auf der Grundplatte verläuft.
Die diagonal und gekreuzt angeordneten Haltebänder erlauben eine sichere Befestigung der Schalldämmplatten in den Rahmen. Die Haltebänder können in den Eckbereichen der Rahmen durch Klemmverbinder befestigt werden. In Abweichung hierzu können die Haltebänder auch mit den Eckbereichen der Rahmen verklebt oder verschweißt sein.

Weitere vorteilhafte Ausgestaltungen des erfindungsgemäßen Schalldämmelements sind in den weiteren Patentansprüchen dargelegt.

In der Zeichnung zeigt:
- **Fig. 1**: Eine Rückansicht eines erfindungsgemäßen Schalldämmelements,
- **Fig. 2**: eine perspektivische Ansicht des Ausschnitts II in der Fig. 1,
- **Fig. 3**: eine vergrößerte perspektivische Ansicht des Ausschnitts III in der Fig. 2,
- **Fig. 4**: eine vergrößerte Explosionsansicht des Ausschnitts IV in der Fig. 2 und
- **Fig. 5**: eine perspektivische Ansicht eines Eckbereichs des fertig montierten Schalldämmelements.

Gleiche konstruktive Elemente weisen in der Zeichnung jeweils dieselben Bezugsziffern auf.

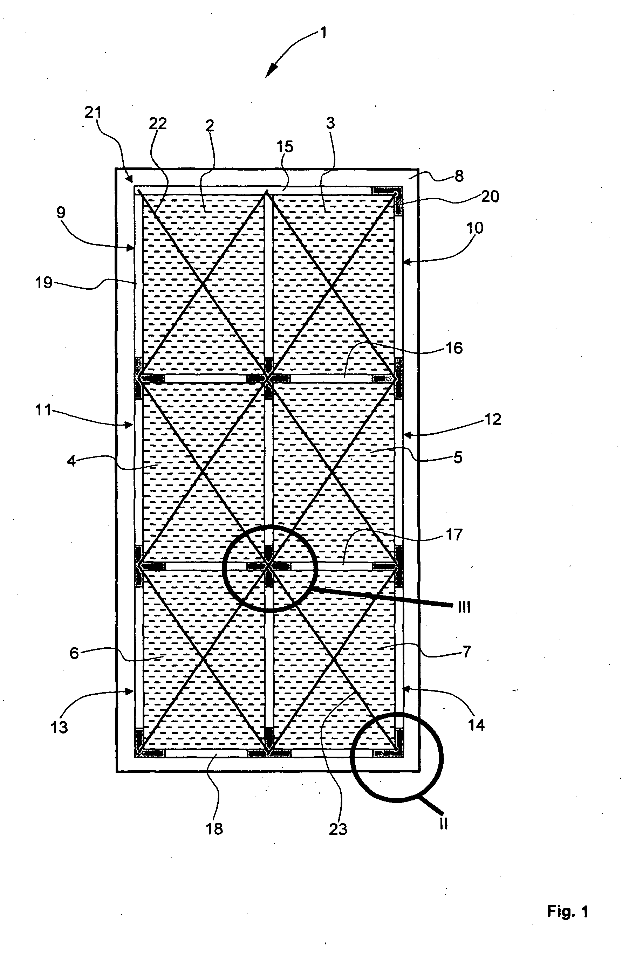

Die **Fig. 1** zeigt eine Rückansicht des erfindungsgemäßen Schalldämmelements.

Das Schalldämmelement 1 umfasst im gezeigten Ausführungsbeispiel sechs Schalldämmplatten 2 bis 7. Auf einer Grundplatte 8 sind sechs im Wesentlichen rechteckförmig ausgebildete Rahmen 9 bis 14 aufgeklebt. Die Rahmen 9 bis 14 dienen insbesondere zur Aufnahme der Schalldämmplatten 2 bis 7.

Die rechteckigen Rahmen 9 bis 14 sind mit vier horizontalen Rahmensegmenten 15 bis 18 sowie mit insgesamt neun vertikalen Rahmensegmenten, von denen der besseren zeichnerischen Übersicht halber nur ein erstes, für die restlichen Rahmensegmente stellvertretendes Rahmensegment 19 mit einer Bezugsziffer versehen ist. Die Rahmensegmente sind bevorzugt mit Rechteckhohlprofilen gebildet, um eine Drainage von Wasser sowie Fremdpartikeln zu ermöglichen. Alternativ können die Rahmensegmente auch mit anderen Profilformen, beispielsweise mit quadratischen Hohlprofilen oder dergleichen, gebildet sein. In den Eckbereichen der Rahmen 9 bis 14 sind jeweils Verbindungslaschen zu mechanischen Versteifung der Rahmen 9 bis 14 aufgeklebt, von denen gleichfalls aus Gründen der besseren zeichnerischen Übersicht lediglich eine, für die übrigen Verbindungslaschen repräsentative Verbindungslasche 20 mit einer Bezugsziffer versehen wurde. Die Verbindungslasche 20 weist eine winkelförmige Gestalt, mit zwei rechtwinklig zueinander angeordneten Schenkeln auf, da in diesem Bereich zwei Rahmensegmente aneinander stoßen. Andere-Verbindungslaschen weisen in Abhängigkeit von der Anzahl (drei oder vier) der aneinander stoßenden Rahmensegmente gegebenenfalls eine T-fömige oder eine kreuzförmige Gestalt auf. Die Rahmensegmente sind in Eckbereichen der Rahmen 9 bis 14 im Wesentlichen unter einem rechten Winkel auf Stoß zusammengesetzt, wobei gleichfalls aus Gründen der besseren Darstellbarkeit lediglich der Eckbereich 21 eine Bezugsziffer aufweist. Im Eckbereich 21 ist gleichfalls eine Verbindungslasche vorgesehen, die aber wegen der besseren Darstellbarkeit der aufeinander stoßenden Rahmensegmente 15,19 und des Haltebandes 22 in der Darstellung weggelassen wurde.

Jeweils zwei gegenüberliegende Eckbereiche eines Rahmens 9 bis 14 sind mit Haltebändern verbunden, von denen lediglich die Haltebänder 22,23 eine Bezugsziffer aufweisen. Die Haltebänder sichern in ihrer Gesamtheit die Schalldämmplatten 2 bis 7 in den Rahmen 9 bis 14.

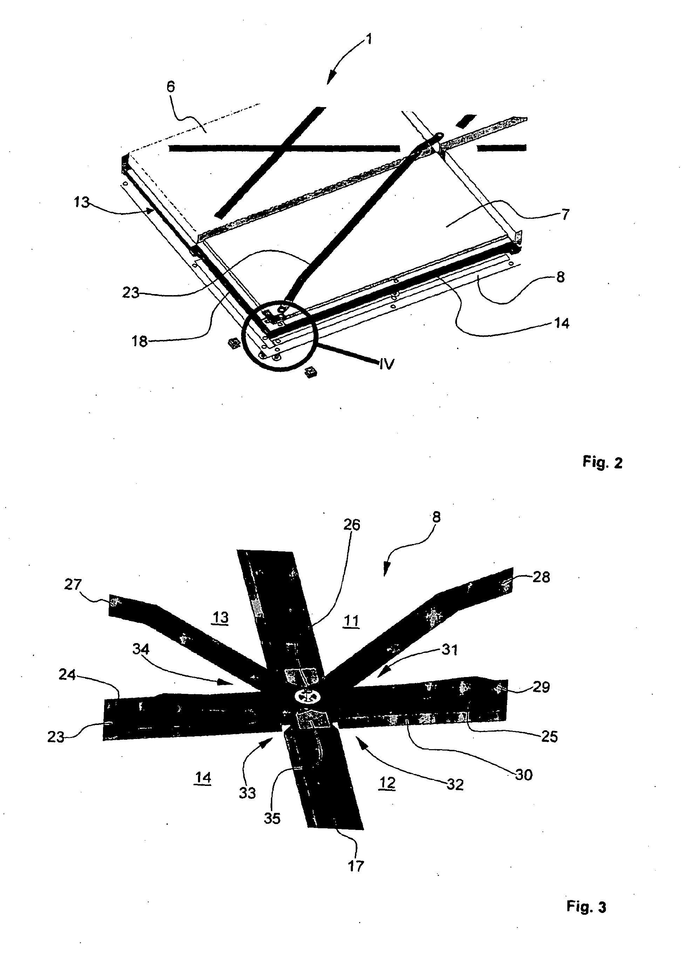

Die **Fig. 2** zeigt einen perspektivische Teilansicht der Darstellung des Schalldämmelements 1 aus der Fig. 1.

Die Schalldämmplatten 6,7 sind unter anderem von den Rahmen 13 und 14 eingefasst. Wie aus der Darstellung der Fig. 2 erkennbar ist, ist das Halteband 23 an beiden Endbereichen geringfügig abgewinkelt ausgebildet. Durch diese Ausgestaltung wird ein unerwünschtes Niederdrücken der Dämmplatten in den Endbereichen der Haltebänder weitgehend vermieden. Weiterhin sind in beiden Endbereichen des Haltebandes 23 Bohrungen zur Befestigung des Haltebandes 23 auf dem Rahmen 14 bzw. der Grundplatte 8 vorgesehen.

Die **Fig. 3** zeigt eine vergrößerte Ansicht des Ausschnitts III in der Fig. 2, wobei in diesem Bereich die Rahmen 11,12,13,14 mit dem Rahmensegment 17 sowie den Rahmensegmenten 24,25 aneinander grenzen. Die Schalldämmplatten 4,5,6,7 sind nicht dargestellt, so dass der Blick auf die darunter liegende Grundplatte 8 freigegeben ist. Mittels eines Klemmverbinders 26 als Verbindungsmittel ist das Halteband 23 sowie die weiteren Haltebänder 27 bis 29 mit dem auf die Grundplatte 8 aufgeklebten Rahmensegment 17 verbunden. An den Rahmensegmenten 17,24,25 ist jeweils ein Übergangsprofil 30 angeordnet, das heißt sowohl mit der Grundplatte 8 als auch mit jeweiligen Rahmensegment verklebt. Hierbei weist nur ein, für die Übrigen repräsentatives Übergangsprofil 30 eine Bezugsziffer auf. Das Übergangsprofil 30 weist im gezeigten Ausführungsbeispiel eine im Wesentlichen dreieckförmige Querschnittsgeometrie auf, so dass eine Schenkelfläche des Übergangsprofils 30 am betreffenden Rahmensegment und die andere Schenkelfläche an der Grundplatte 8 anliegt bzw. mit dieser verklebt ist. Das Übergangsprofil 30 bzw. die weiteren Übergangsprofile sind hierbei mit einem elastischen, selbstklebenden Kunststoffmaterial gebildet. Die Übergangsprofile sind beispielsweise mit einer Zweikomponenten-Dichtmasse, insbesondere auf der Basis eines Polysulfid-Polymers, eines Polythioether-Polymers, eines Vinylidenfluorid-Polymers, eines Hexafluorpropylen-Polymers (FPM), eines Polyurethan-Polymers oder dergleichen, gebildet. Die Übergangsprofile können alternativ auch mit einer Spachtel- oder Spritzmasse mit den genannten Kunststoffmaterialien gebildet sein.

In den vier Eckbereichen 31 bis 34 sind die Übergangsprofile nicht auf Gehrung geschnitten, so dass kleine, quadratische Flächenstücke der Grundplatte 8 nicht von den Übergangsprofilen bzw. dem Übergangsprofil 30 bedeckt sind und eine Drainage von Wasser und Fremdpartikeln möglich ist. Eine aufgeklebte Verbindungslasche 35 weist eine kreuzförmige Gestalt auf, um das durchgehende Rahmensegment 17 sowie die beiden hieran unter einem rechten Winkel anstoßenden Rahmensegmente 24,25 zusätzlich zu der Klebeverbindung mit der Grundplatte 8 untereinander zu verbinden.

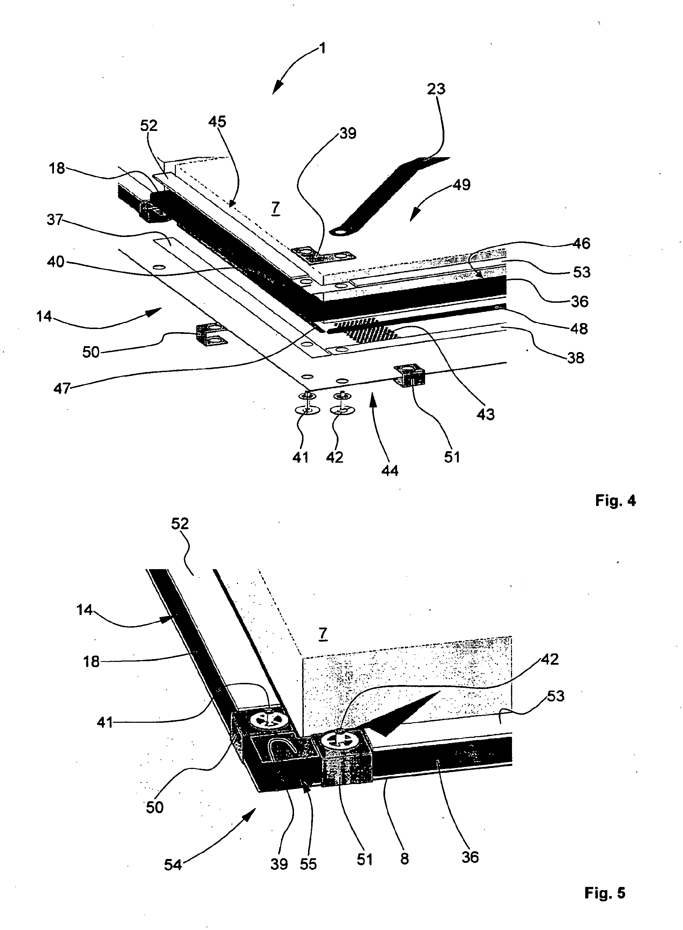

Die **Fig. 4** zeigt eine vergrößerte Explosionsansicht des Ausschnitts IV aus der Fig. 2. Die Schalldämmplatte 7 ist von dem Rahmensegment 18 sowie einem Rahmensegment 36 eingefasst. Die Rahmensegmente 18,36 sind mittels der Klebstoffschichten 37,38 auf der Grundplatte 8 aufgeklebt. Oberhalb der Schalldämmplatte 7 ist das Halteband 23 dargestellt. Darüber hinaus sind die Rahmensegmente 18,36 mittels der aufgeklebten Verbindungslasche 39 zur Erhöhung der mechanischen Festigkeit verbunden. Die Verbindungslasche 39 wird hierbei mittels der Klebstoffschicht 40 aufgeklebt. Um die Festigkeit der mechanischen Verbindung zwischen der Grundplatte 8, den Rahmensegmenten 18,36, der Verbindungslasche 39 sowie dem Halteband 23 zu verbessern und einen zusätzlichen Lastpfad im Falle des Versagens der Klebeverbindung zu schaffen, sind in den Endbereichen der genannten Komponenten jeweils zwei Bohrungen eingebracht, durch die die zwei Klemmverbinder 41,42 als Verbindungsmittel hindurch führbar und befestigbar sind. Die Klemmverbinder 41,42 lassen vorzugsweise eine werkzeuglose Montage zu. Die Bohrungen in den vorstehend erwähnten Komponenten weisen der besseren zeichnerischen Übersichtlichkeit halber keine Bezugsziffern auf.

Zumindest unterhalb der Schalldämmplatte 7 ist ein Lochraster 43 in die Grundplatte 8 eingebracht, das im Wesentlichen zur Schalltransmission von auf einer Vorderseite 44 des erfindungsgemäßen Schalldämmelements 1 auftreffenden Schallwellen auf die Schalldämmplatten 7 dient. Weiterhin sind im Bereich der Innenkanten 45,46 der Rahmensegmente 18,36 selbstklebende Übergangsprofile 47,48 angeordnet, die eine beispielsweise dreieckförmige Querschnittsgeometrie aufweisen. Alternativ können die Übergangsprofile 47,48 auch eine quadratische, rechteckförmige, hohlkehlförmige oder viertelkreisförmige Querschnittsgeometrie aufweisen. Die Übergangsprofile 47,48 sind aufgrund ihrer Selbstklebeeigenschaften sowohl mit den Innenkanten 45,46 als auch mit der Grundplatte 8 fest verbunden bzw. mit dieser fest verklebt. Die Übergangsprofile 47,48 dienen insbesondere dazu, die Gefahr von Materialermüdungserscheinungen im Bereich des zwischen dem Innenbereich 49 des Rahmens 14 bzw. der Dämmplatte 7 und der Rahmensegmente 18,36 des Rahmens 14 sich ergebenden Steifigkeitssprungs zu vermindern. Der Innenbereich 49 der Grundplatte 8 neigt aufgrund deren geringer Materialstärke infolge der auftreffenden Schallwellen zu mechanischen Schwingungen, während im Bereich der Rahmensegmente 18,36 eine nennenswerte Schwingungsanregung der Grundplatte 8 aufgrund der hohen mechanischen Steifigkeit des Rahmens 7 und der hiermit verbundenen Grundplatte 8 kaum möglich ist, so dass im Bereich dieses Steifigkeitssprungs ohne die Übergangsprofile 47,48 bevorzugt Ermüdungsbrüche auftreten würden.

Weiterhin sind zwei elektrisch leitfähige Clipse 50,51 vorgesehen, die ebenfalls eine Bohrung aufweisen, und die zur elektrisch leitenden Verbindung zwischen den Rahmensegmenten 18,36 sowie der Grundplatte 8 dienen. Die Clipse 50,51 werden gleichermaßen mit den Klemmverbindern 41,42, mit den Rahmensegmenten 18,36, der Grundplatte 8, der Verbindungslasche 39 sowie dem Halteband 23 verbunden.

Ferner sind auf den Rahmensegmenten 18,36 Dichtmittel 52,53, beispielsweise in der Form von elastischen Flachdichtungen oder dergleichen, angeordnet. Die Dichtmittel 52,53 ermöglichen eine weitgehend rauch-, gas- und druckdichte Verbindung des Schalldämmelements 1 mit weiteren, nicht näher dargestellten Konstruktionselementen.

Die **Fig. 5** zeigt den Eckbereich des erfindungsgemäßen Schalldämmelements 1 nach Maßgabe der Fig. 4 im zusammengesetzten, fertig montierten Zustand.

Die Schalldämmplatte 7 ist von dem Rahmensegment 18 und dem Rahmensegment 36 eingefasst. In einem Eckbereich 54 sind das Rahmensegment 18 sowie das Rahmensegment 36, die im gezeigten Ausführungsbeispiel jeweils mit Rechteckhohlprofilen gebildet sind, unter einem Winkel von etwa 90° auf Stoß verbunden. Die Rahmensegmente 18,36 sind hierbei auf die Grundplatte 8 aufgeklebt und zusätzlich in einem Eckbereich 54 mittels der aufgeklebten, winkelförmigen Verbindungslasche 39 verbunden. Die Verbindungslasche 39, die Rahmensegmente 18,36 sowie die Grundplatte 8 werden im Eckbereich 54 von den Clipsen 50,51 zur Herstellung einer elektrisch leitfähigen Verbindung zwischen den Rahmensegmenten 18,36 sowie der Grundplatte 8 umfasst. Die Grundplatte 8, die Rahmensegmente 18,36, die Verbindungslasche 39 sowie die beiden Clipse 50,51 werden hierbei mittels der Klemmverbinder 41,42 zusätzlich mechanisch verbunden. Weiterhin sind auf den Rahmensegmenten 18, 36 die Dichtmittel 52,53 aufgebracht.

Aufgrund des Umstandes, dass die als Rechteckprofile ausgebildeten Rahmensegmente 18,36 des Rahmens 14 im Eckbereichs 54 lediglich rechtwinklig auf Stoß angeordnet sind, können eingedrungene Fremdpartikel, wie zum Beispiel Sandkörner oder auch Wasser, aus einer Öffnung 55 des Rahmensegments 18 wieder austreten. Damit sind sämtliche Rahmen, die zur Einfassung bzw. mechanischen Fixierung der Schalldämmplatten des Schalldämmelements 1 dienen, drainagefähig und so beispielsweise vor Korrosionsprozessen in Folge von nicht abzuführender Feuchtigkeit geschützt.

Die Grundplatte, die Rahmensegmente sowie die Verbindungslaschen können sowohl mit metallischen Materialien als auch mit Kunststoffmaterialien gebildet sein. In Abhängigkeit von den eingesetzten Materialien kann die Verbindung der Rahmensegmente mit der Grundplatte bzw. die Verbindung der Rahmensegmente mit den Verbindungslaschen durch beliebige Klebeverfahren, Lötverfahren oder Schweißverfahren, insbesondere durch Punktschweißen, Ultraschallschweißen, Laserschweißen oder dergleichen erfolgen.

Als metallische Materialien für die Rahmensegmente, die Grundplatte sowie die Verbindungslaschen können beispielsweise Aluminium, Aluminiumlegierungen, Stahl, Stahllegierungen, Edelstahl, Titan sowie Titanlegierungen verwendet werden. Alternativ können die Rahmensegmente, die Grundplatte sowie die Verbindungslaschen auch mit vorimprägniertem "Prepreg"- Material, insbesondere mit kohlefaserverstärkten Epoxydharzen oder dergleichen gebildet werden. Weiterhin kommen Polyesterharze, Phenolharze, BMI-Harze, jeweils mit einer Faserarmierung mit Glasfasern, Kohlefasern, Aramidfasern oder dergleichen, als nichtmetallische Werkstoffe in Betracht.

Die Schalldämmplatten können mit beliebigen schallabsorbierenden Materialien, wie zum Beispiel mit Mineralwolle, Schaumkunststoffen, Glaswolle, Fasergewirken oder dergleichen gebildet sein.

### Bezugszeichenliste

- 1: Schalldämmelement
- 2: Schalldämmplatte
- 3: Schalldämmplatte
- 4: Schalldämmplatte
- 5: Schalldämmplatte
- 6: Schalldämmplatte
- 7: Schalldämmplatte
- 8: Grundplatte
- 9: Rahmen
- 10: Rahmen
- 11: Rahmen
- 12: Rahmen
- 13: Rahmen
- 14: Rahmen
- 15: Rahmensegment (horizontal)
- 16: Rahmensegment (horizontal)
- 17: Rahmensegment (horizontal)
- 18: Rahmensegment (horizontal)
- 19: Rahmensegment (vertikal)
- 20: Verbindungslasche
- 21: Eckbereich
- 22: Halteband
- 23: Halteband
- 24: Rahmensegment
- 25: Rahmensegment
- 26: Klemmverbinder
- 27: Halteband
- 28: Halteband
- 29: Halteband
- 30: Übergangsprofil
- 31: Eckbereich
- 32: Eckbereich
- 33: Eckbereich
- 34: Eckbereich
- 35: Verbindungslasche
- 36: Rahmensegment
- 37: Klebstoffschicht
- 38: Klebstoffschicht
- 39: Verbindungslasche
- 40: Klebstoffschicht
- 41: Klemmverbinder
- 42: Klemmverbinder
- 43: Lochraster
- 44: Vorderseite
- 45: Innenkante
- 46: Innenkante
- 47: Übergangsprofil
- 48: Übergangsprofil
- 49: Innenbereich (Rahmen)
- 50: Clip
- 51: Clip
- 52: Dichtmittel
- 53: Dichtmittel
- 54: Eckbereich
- 55: Öffnung

## Patentansprüche

1. Schalldämmelement (1) für Verkehrsmittel, insbesondere für Luftfahrzeuge, mit mindestens einer auf einer Grundplatte (8) angeordneten Schalldämmplatte (2-7), wobei die Grundplatte (8) eine Vielzahl von Ausnehmungen, insbesondere ein Lochraster (43) oder dergleichen, zur Transmission von Schall aufweist, und die Schalldämmplatte oder die Schalldämmplatten (2-7) jeweils von einem Rahmen (9-14) eingefasst sind, wobei an dem wenigstens einen Rahmen (9-14) zumindest abschnittsweise ein elastisches Übergangsprofil (30, 47, 48) zwischen dem wenigstens einen Rahmen (9-14) und der Grundplatte (8) angeordnet ist zur Vermeidung von Ermüdungsbrüchen infolge von Steifigkeitssprüngen, **dadurch gekennzeichnet, dass** im Bereich mindestens eines Rahmensegments (15-19, 24, 25, 36) mindestens ein elektrich leifähiger Clip (50, 51) vorgesehen ist, der zur elektrisch leitenden Verbindung zwischen den Rahmensegementen (15-19, 24, 25, 36) und der Grundsplatte (8) dient und wobei die Grundplatte und die Rahmensegmente zumindest teilweise mit einem metallischen Material gebildet sind.

2. Schalldämmelement (1) nach Anspruch 1, **dadurch gekennzeichnet, dass** das wenigstens eine Übergangsprofil (30, 47, 48) mit einem selbstklebenden Kunststoffmaterial gebildet ist.

3. Schalldämmelement (1) nach Anspruch 1 oder 2, **dadurch gekennzeichnet, dass** der Rahmen oder die Rahmen (9-14) mit jeweils vier Rahmensegmenten (15-19, 24, 25, 36) gebildet sind, wobei die Rahmensegmente (15-19, 24, 25, 36) im Wesentlichen auf Stoß und in etwa rechtwinklig zueinander zur Bildung eines jeweils im Wesentlichen viereckigen Rahmens (9-14) mit der Grundplatte (8) verbunden sind.

4. Schalldämmelement (1) nach einem der Ansprüche 1 bis 3, **dadurch gekennzeichnet, dass** das wenigstens eine Übergangsprofil (30, 47, 48) zumindest abschnittsweise mit mindestens einem Rahmensegment (15-19, 24, 25, 36) und mit der Grundplatte (8) verbunden ist.

5. Schalldammelement (1) nach einem der Ansprüche 1 bis 4, **dadurch gekennzeichnet, dass** Rahmensegmente (15-19, 24, 25, 36) mit Hohlprofilen, insbesondere mit Rechteckhohlprofilen zur Drainage von Wasser und Fremdpartikeln, gebildet sind.

6. Schalldämmelement (1) nach einem der Ansprüche 1 bis 5, **dadurch gekennzeichnet, dass** in Eckbereichen (21, 31-34, 54) der Rahmen (9-14) jeweils eine Verbindungslasche (20, 35, 39) auf Rahmensegmente (15-19, 24, 25, 36) zur mechanischen Versteifung aufgebracht ist.

7. Schalldämmelement (1) nach einem der Ansprüche 1 bis 6, **dadurch gekennzeichnet, dass** ausgehend von jeweils diagonal gegenüberliegenden Eckbereichen (21,31-34,54) des wenigstens einen Rahmens (9-14) jeweils ein Halteband (22.23,27-29) zur Fixierung der wenigstens einen Schalldämmplatte (2-7) auf der Grundplatte (8) verläuft.

8. Schalldämmelement (1) nach einem der Ansprüche 1 bis 7, **dadurch gekennzeichnet, dass** Haltebänder (22, 23, 27-29) in Eckbereichen (21, 31-34, 54) der Rahmen (9-14) mit Verbindungsmitteln, insbesondere mit Klemmverbindern (41, 42) oder dergleichen, mit der Grundplatte (8) verbunden sind.

9. Schalldämmelement (1) nach einem der Ansprüche 1 bis 8, **dadurch gekennzeichnet, dass** wenigstens ein Rahmensegment (15-19, 24, 25, 36) zumindest abschnittsweise mindestens ein Dichtmittel (52, 53), insbesondere eine Flachdichtung oder dergleichen, aufweist.

10. Schalldämmelement (1) nach einem der Ansprüche 1 bis 9, **dadurch gekennzeichnet, dass** die wenigstens eine Schalldämmplatte (2-7) mit einem schallabsorbierenden Material, insbesondere mit einem Schaumkunststoff, mit Glaswolle, mit Mineralwolle oder dergleichen, gebildet ist.

11. Schalldämmelement (1) nach einem der Ansprüche 1 bis 10, **dadurch gekennzeichnet, dass** die Grundplatte (8) und/oder die Rahmensegmente (15-19, 24, 25, 36) mit einem metallischen Material und mit einem Kunststoffmaterial gebildet sind.

## Claims

1. A sound absorption element (1) for means of transport, in particular for aircraft, comprising at least one sound absorption panel (2-7) arranged on a base panel (8), with the base panel (8) comprising a multitude of recesses, in particular a hole grid (43) or the like, for the transmission of sound, and in each case the sound absorption panel or panels (2-7) being framed by a frame (9-14), wherein on the at least one frame (9-14) at least in some sections an elastic transition profile is arranged between the at least one frame (9-14) and the base panel (8) to prevent fatigue fractures due to stepwise changes of rigidity, **characterized in that** in a region of at least one frame segment (15-19, 24, 25, 26) at least one electrically conductive clip is provided, serving for electrically conductive connection between the frame segment (15-19, 24, 25, 26) and the base plate (8) and wherein the base plate and the frame segments are at least partially formed with a metal material.

2. The sound absorption element (1) of claim 1, wherein the at least one transition profile (30, 47, 48) comprises a self-adhesive plastic material.

3. The sound absorption element (1) of claim 1 or 2, wherein the frame or frames (9-14) are each formed with four frame segments (15-19, 24, 25, 36), wherein the frame segments (15-19, 24, 25, 36) are essentially connected to the base panel (8) so as to abut, approximately at right angles to each other, in order to form an essentially rectangular frame (9-14).

4. The sound absorption element (1) of any one of claims 1 to 3, wherein the at least one transition profile (30, 47, 48) is connected, at least in some sections, to at least one frame segment (15-19, 24, 25, 36) and to the base panel (8).

5. The sound absorption element (1) of any one of claims 1 to 4, wherein the frame segments (15-19, 24, 25, 36) comprise hollow profiles, in particular rectangular hollow profiles, in order to make it possible for water and extraneous particles to drain away.

6. The sound absorption element (1) of any one of claims 1 to 5, wherein in corner regions (21, 31-34, 54) of the frames (9-14) in each case a connecting strap (20, 35, 39) is applied to the frame segments (15-19, 24, 25, 36) to provide mechanical stiffening.

7. The sound absorption element (1) of any one of claims 1 to 6, wherein starting from the diagonally opposite corner regions (21, 31-34, 54) of the at least one frame (9-14) in each case a retention strap (22, 23, 27-29) extends for affixing the at least one sound absorption panel (2-7) to the base panel (8).

8. The sound absorption element (1) of any one of claims 1 to 7, wherein retention straps (22, 23, 27-29) in the corner regions (21, 31-34, 54) of the frames (9-14) are connected by connecting means, in particular clamp-type connectors (41, 42) or the like, to the base panel (8).

9. The sound absorption element (1) of any one of claims 1 to 8, wherein at least one frame segment (15-19, 24, 25, 36) at least in some sections comprises at least one sealing means (52, 53), in particular a flat seal or the like.

10. The sound absorption element (1) of any one of claims 1 to 9, wherein the at least one sound absorption panel (2-7) comprises a sound-absorbent material, in particular plastic foam, glass wool, mineral wool or the like.

11. The sound absorption element (1) of any one of claims 1 to 10, wherein at least one of the base panel (8) and the frame segments (15-19, 24, 25, 36) comprises/comprise a metallic material and a plastic material.

## Revendications

1. Elément d'insonorisation (1) pour des moyens de transport, en particulier pour des aéronefs, comprenant au moins un panneau insonorisant (2-7) disposé sur une plaque de base (8), élément d'insonorisation dans lequel la plaque de base (8) présente une multiplicité de creux, en particulier une grille perforée (43) ou autres, pour la transmission du son, et le panneau insonorisant ou les panneaux insonorisants (2-7) sont chacun bordés par un cadre (9-14), un profilé de transition élastique (30, 47, 48) est disposé au moins par sections sur le au moins un cadre (9-14), entre le au moins un cadre (9-14) et la plaque de base (8), pour éviter des ruptures de fatigue consécutives à des discontinuités de rigidité, **caractérisé en ce qu'**au moins un clip (50, 51) conducteur électriquement est prévu dans la zone d'au moins un segment de cadre (15-19, 24, 25, 36), lequel clip sert à la liaison électrique conductrice entre les segments de cadre (15-19, 24, 25, 36) et la plaque de base (8), et la plaque de base et les segments de cadre étant formés au moins en partie par un matériau métallique.

2. Elément d'insonorisation (1) suivant la revendication 1, **caractérisé en ce que** le au moins un profilé de transition (30, 47, 48) est formé d'une matière plastique autoadhésive.

3. Elément d'insonorisation (1) suivant l'une des revendications 1 et 2, **caractérisé en ce que** le cadre ou les cadres (9-14) sont formés chacun de quatre segments de cadre (15-19, 24, 25, 36), les segments de cadre (15-19, 24, 25, 36) étant assemblés essentiellement en bout à bout et à peu près perpendiculairement entre eux pour former avec la plaque de base (8) un cadre (9-14) essentiellement carré.

4. Elément d'insonorisation (1) suivant l'une des revendications 1 à 3, **caractérisé en ce que** le au moins un profilé de transition (30, 47, 48) est assemblé au moins par sections avec au moins un segment de cadre (15-19, 24, 25, 36) et avec la plaque de base (8).

5. Elément d'insonorisation (1) suivant l'une des revendications 1 à 4, **caractérisé en ce que** les segments de cadre (15-19, 24, 25, 36) sont formés de profilés creux, en particulier de profilés creux rectangulaires pour le drainage d'eau et de particules étrangères.

6. Elément d'insonorisation (1) suivant l'une des revendications 1 à 5, **caractérisé en ce que**, dans des zones d'angle (21, 31-34, 54) des cadres (9-14), une éclisse (20, 35, 39) est respectivement montée sur des segments de cadre (15-19, 24, 25, 36) pour le renforcement mécanique.

7. Elément d'insonorisation (1) suivant l'une des revendications 1 à 6, **caractérisé en ce qu'**une bande de retenue (22, 23, 27-29), destinée à la fixation de le au moins un panneau insonorisant (2-7) sur la plaque de base (8), s'étend respectivement à partir de zones d'angle (21, 31-34, 54) de le au moins un cadre (9-14), situées respectivement en vis-à-vis diagonal.

8. Elément d'insonorisation (1) suivant l'une des revendications 1 à 7, **caractérisé en ce que** des bandes de retenue (22, 23, 27-29) sont assemblées avec la plaque de base (8), dans des zones d'angle (21, 31-34, 54) des cadres (9-14), par des moyens d'assemblage, en particulier des raccords de serrage (41, 42) ou analogues.

9. Elément d'insonorisation (1) suivant l'une des revendications 1 à 8, **caractérisé en ce qu'**au moins un segment de cadre (15-19, 24, 25, 36) présente au moins par sections en moins un moyen d'étanchéité (52, 53), en particulier une garniture plate ou analogues.

10. Elément d'insonorisation (1) suivant l'une des revendications 1 à 9, **caractérisé en ce que** le au moins un panneau insonorisant (2-7) est formé d'un matériau à absorption acoustique, en particulier d'une mousse de plastique, de laine de verre, de laine minérale ou analogues.

11. Elément d'insonorisation (1) suivant l'une des revendications 1 à 10, **caractérisé en ce que** la plaque de base (8) et/ou les segments de cadre (15-19, 24, 25, 36) sont formés d'un matériau métallique et d'une matière plastique.
